Europäisches Patentamt

(19) European Patent Office

Office européen des brevets

(11) Publication number: **0 171 931 B1**

(12) **EUROPEAN PATENT SPECIFICATION**

(45) Date of publication of patent specification: **23.08.89**

(21) Application number: **85305029.2**

(22) Date of filing: **15.07.85**

(51) Int. Cl.⁴: **G 01 F 1/24**, G 01 D 5/20

(54) Instruments with moving magnets.

(30) Priority: **17.07.84 GB 8418151**

(43) Date of publication of application:
**19.02.86 Bulletin 86/08**

(45) Publication of the grant of the patent:
**23.08.89 Bulletin 89/34**

(84) Designated Contracting States:
**AT BE CH DE FR GB IT LI LU NL SE**

(56) References cited:
**DE-A-1 773 851**
**DE-A-2 360 097**
**DE-A-2 801 785**
**DE-B-2 432 574**
**GB-A-2 090 419**

(73) Proprietor: **HAYDEN NILOS CONFLOW LIMITED**
**Darnall Road**
**Sheffield S9 (GB)**

(72) Inventor: **Perry, Dennis Alfred**
**341 Aspley Lane**
**Nottingham (GB)**

(74) Representative: **Houghton, David et al**
**Hulse & Co. Cavendish Buildings West Street**
**Sheffield, S1 1ZZ (GB)**

Courier Press, Leamington Spa, England.

## Description

This invention relates to instruments with moving magnets, such as flowmeters or pressure gauges, in which at least one bar magnet is housed within a linearly-movable characteristic-responsive element (hereinafter referred to as the "transducing element"), such as a plunger or piston, movable, as by fluid flow or pressure, in a guide extending parallel to the magnet against a spring urge or gravity, indicating means being actuated by a change in magnetic field as the magnet moves, and such indicating means can be a pointer on a scale as in GB-A-2 090 419.

DE-A-1 773 851 discloses a flowmeter in which the transducing element is a float movable axially with respect to a measuring cone secured in a measuring tube, with a bar magnet carried by a spoke of a guide ring on the float transversely with respect to the axis of the measuring tube. This produces a highly convergent magnetic field which can transmit a very accurate reading of the location of the float to an external indicating means, which is not shown. In order to prevent rotation of the bar magnet from the most favourable position relative to the indicating means, an axially parallel ferromagnetic strip is provided on the outside of the measuring tube diametrically opposite the indicating means.

In GB-A-2 090 419 the transducing element is a plunger movable axially with respect to a measuring cone, with a bar magnet housed in an axial bore in the plunger, and the indicator means has a pointer mounted for rotation with a circular magnet influenced by the field of the bar magnet, while in GB-A-2 123 964 the pointer and circular magnet are replaced by a digital display and Hall-effect detector influenced by the field of the bar magnet.

As the rotation prevention means disclosed in DE-A-1 773 851 is not applicable to the flowmeter of GB-A-2 090 419 or GB-A-2 123 964 the object of the invention is to provide purely mechanical means for preventing rotation of the bar magnet in the latter.

According to the present invention, an instrument with at least one bar magnet housed within a transducing element movable in a guide, indicating means actuated by a change in magnetic field as the magnet moves with the transducing element, and means to prevent rotation of the transducing element with respect to the guide, is characterised in that the transducing element has a cylindrical portion slidable in a guide bore, and the rotation prevention means comprises positively locating engagements between a part of a spring and the transducing element and between another part of the spring and the guide. Thus, a coil compression spring may have non-helical end portions engaging non-concentric formations on the transducing element and the guide, e.g. chordal end portions engaging flats, 'or longitudinally-extending end portions engaging non-axial holes.

Alternatively, the rotation prevention means may be a splined engagement between the transducing element and the guide, e.g., balls located in depressions in the plunger engaging longitudinal grooves in the guide, or the transducing element may have a portion of non-circular cross-section, e.g., square with bevelled or rounded corners, slidable in a bore of similar cross-section in the guide.

Again, the rotation prevention means may be a rod extending parallel to the transducing element and slidable in a bore extending parallel to the guide, with the rod extending as an outrigger from the transducing element into a bore alongside the guide, or with the rod extending from a support fixed in relation to the guide into a bore in the transducing element offset from its axis.

A number of embodiments of the invention will now be described, by way of example only, with reference to the accompanying drawings, in which:

Figure 1 is a fragmentary axial section through a flowmeter showing a first embodiment of the invention;

Figure 2 is a section on the line II-II of Figure 1;

Figure 3 is a section on the line III-III of Figure 1;

Figure 4 corresponds to Figure 1 but shows a second embodiment of the invention;

Figure 5 corresponds to Figure 1 but shows a third embodiment of the invention;

Figure 6 is a section on the line VI-VI of Figure 5;

Figure 7 corresponds to Figure 1 but shows a fourth embodiment of the invention;

Figure 8 is a section on the line VIII-VIII of Figure 7;

Figure 9 corresponds to Figure 1 but shows a fifth embodiment of the invention;

Figure 10 correspnds to Figure 1 but shows a sixth and final embodiment of the invention; and

Figure 11 is an elevation in the direction of the arrow XI of Figure 10.

In the Figures the flowmeter comprises a body 10, an inlet 11 leading to the smaller diameter end 12 of a tapered passage 13 in the body leading to an outlet 14, and annular seating 15 at the smaller end of the tapered passage and facing towards the larger end 16, a circular valve member 17, a spring 18 urging the valve member towards contact with the seating, a plunger 19 coaxial with the valve member and slidable in a guide member 20 within a bore 21 in the body, a bar magnet 22 in a coaxial bore 23 in the plunger, a screwthread 24 in the bore 23, a screw 25 mating with the screwthread for holding the magnet 22 captive in the bore.

The bar magnet 22 is used in association with a magnetic detector consisting of either a circular magnet (not shown) or a Hall effect integrated circuit (not shown) housed in a blind bore 26 in the body, the magnetic detector being adapted to operate a pointer on a scale (not shown) or a liquid crystal display (not shown) for registering the rate of flow through the flowmeter.

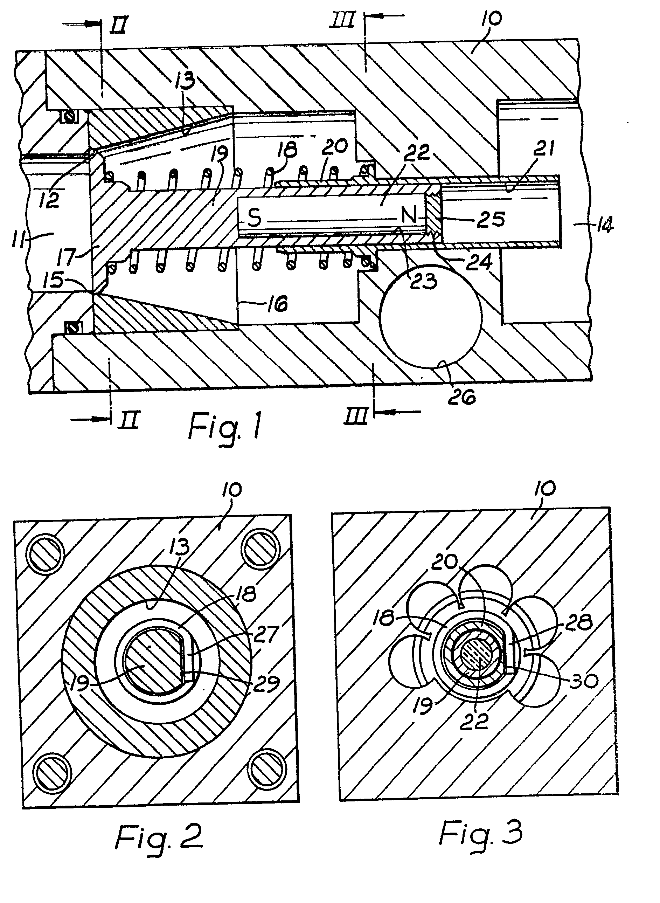

In the embodiment shown in Figures 1 to 3 rotation prevention means for the plunger 19 comprises chordal end portions 27, 28 of the spring 18 engaging flats 29, 30, respectively in the end of plunger 19 adjacent the valve member and in the guide member 20.

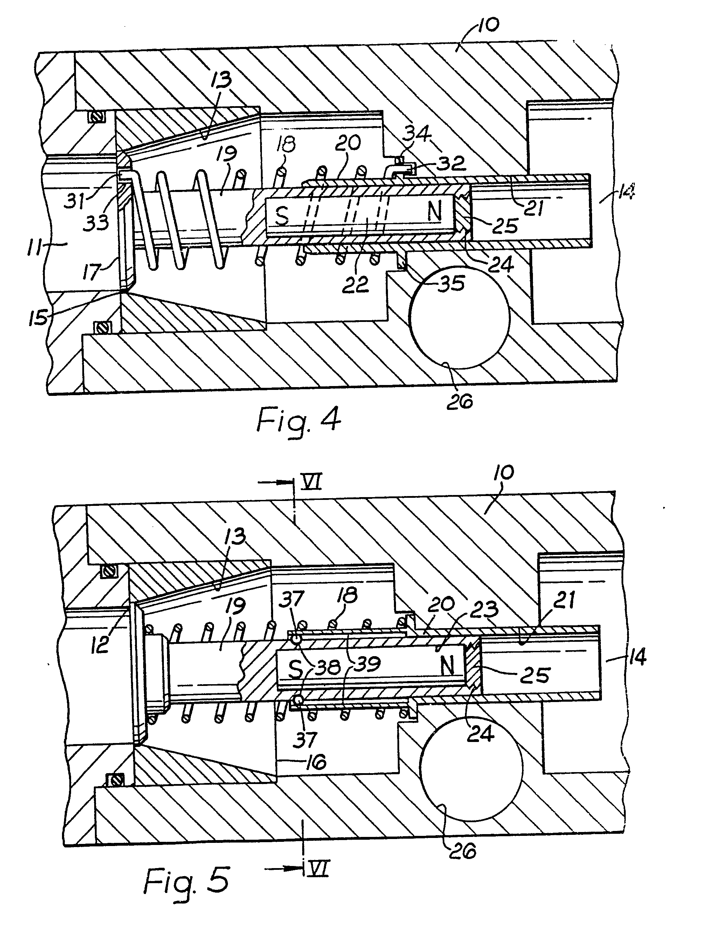

In the embodiment shown in Figure 4 the rotation prevention means comprises longitudinally — extending end portions 31, 32 engaging non-axial holes 33, 34 in the plunger 19 and an annular flange 35 in the guide member 20 respectively. The end portion 32 also extends through the flange into hole 36 in the body 10.

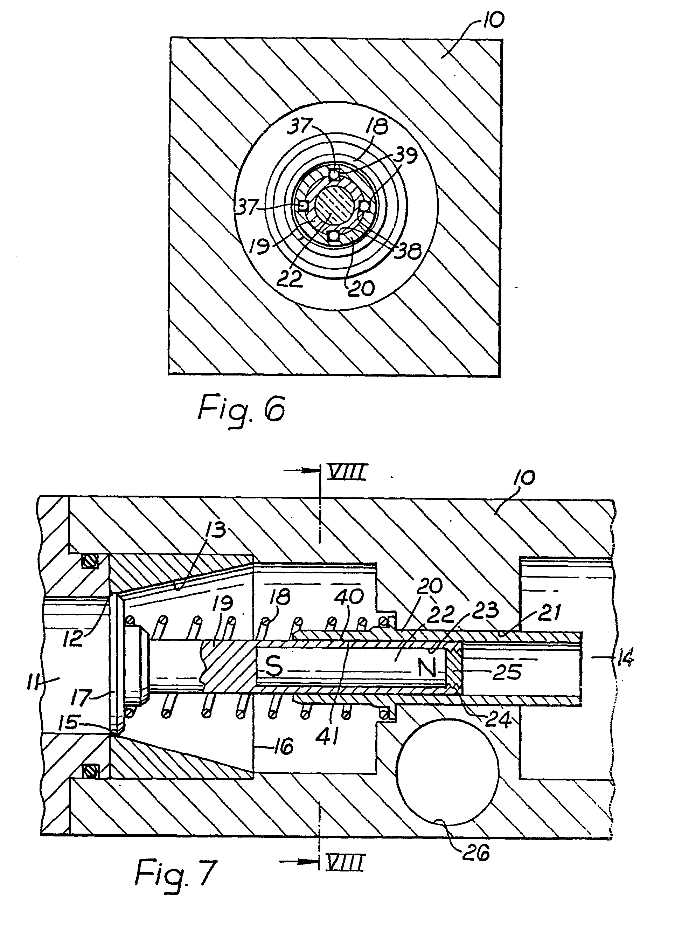

In the third embodiment shown in Figures 5 and 6 the rotation prevention means comprises radially displaced balls 37 located in depressions 38 in the plunger 19 and engaging longitudinal grooves 39 in the guide member.

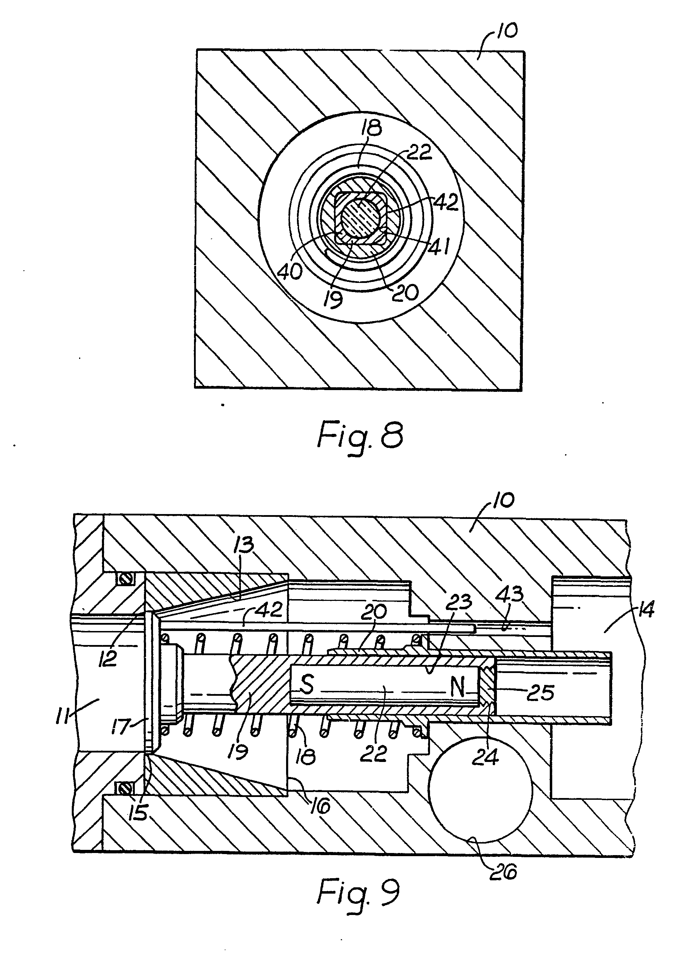

In the fourth embodiment shown in Figures 7 and 8 the rotation prevention means is provided by the plunger having a portion square cross-section 40 slidable in a bore 41 of similar cross-section in the guide member.

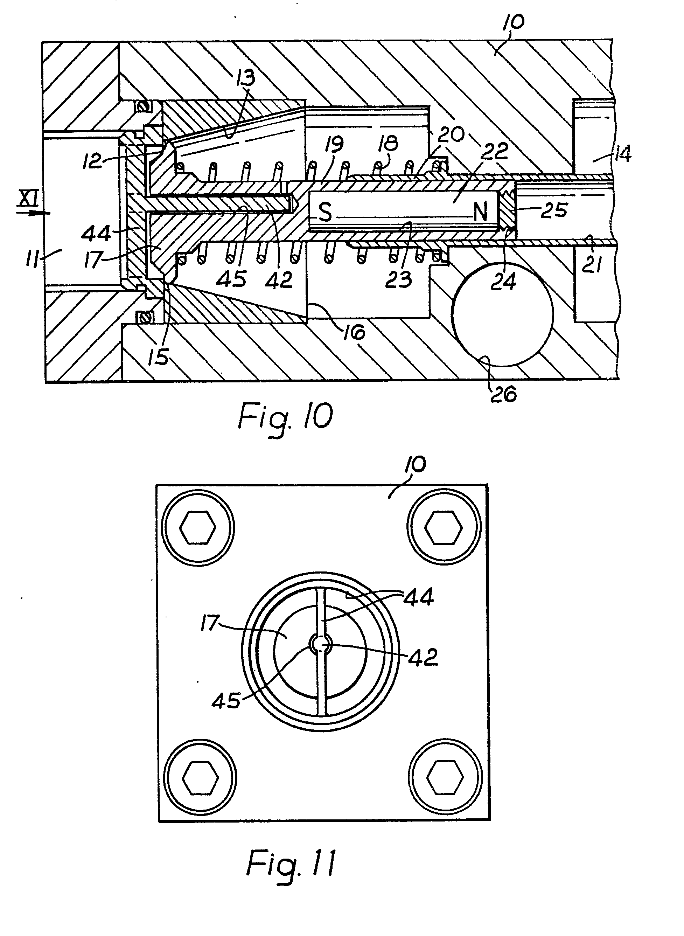

In the fifth embodiment shown in Figure 9 the rotation prevention means comprises a rod 42 extending parallel to the plunger and slidable in a bore 43 extending parallel to the guide member with the rod 42 extending as an outrigger from the plunger into the bore 43 or alternatively as in the sixth embodiment shown in Figures 10 and 11 the rod 42 extends from a support 44 fixed in relation to the guide member into a bore 45 in the plunger offset from its axis.

## Claims

1. An instrument with at least one bar magnet (22) housed within a transducing element (19) movable in a guide (20), indicating means actuated by a change in magnetic field as the magnet moves, and means to prevent rotation of the transducing element (19) with respect to the guide (20), characterised in that the transducing element (19) has a cylindrical portion slidable in a guide bore, and the rotation prevention means comprises positively locating engagements (27, 29 and 28, 30) between a part of a spring (18) and the transducing element (19) and between another part of the spring and the guide (20).

2. An instrument as in Claim 1, characterised in that the locating engagements are non-helical end portions (27, 28) on the spring (18) engaging non-concentric formations (29, 30) on the transducing element (19) and the guide (20).

3. An instrument as in Claim 2, characterised in that the locating engagements are chordal end portions (27, 28) of the spring (18) engaging flats (29, 30) respectively on the transducing element (19) and the guide (20).

4. An instrument as in Claim 2, characterised in that the locating engagements are end portions (31, 32) of the spring (18) extending longitudinally and engaging non axial holes (33, 34) in the transducing element (19) and in the guide (20).

5. An instrument with at least one bar magnet (22) housed within a transducing element (19) movable in a guide (20), indicating means actuated by a change in magnetic field as the magnet moves, and means to prevent rotation of the transducing element (19) with respect to the guide (20), characterised in that the rotation prevention means comprises a splined engagement (37, 38, 39) between the transducing element (19) and the guide (20).

6. An instrument as in Claim 5, characterised in that the splined engagement comprises balls (37) located in depressions (38) in the transducing element (19) engaging longitudinal grooves (39) in the guide (20).

7. An instrument as in Claim 5, characterised in that the transducing element (19) has a portion of non-circular cross-section (40) slidable in a bore (41) of similar cross-section in the guide (20).

8. An instrument as in Claim 7, characterised in that the portion of non-circular cross-section (40) is square with bevelled or rounded corners.

9. An instrument with at least one bar magnet (22) housed within a transducing element (19) movable in a guide (20), indicating means actuated by a change in magnetic field as the magnet moves, and means to prevent rotation of the transducing element (19) with respect to the guide (20), characterised in that the rotation prevention means is a rod (42) extending parallel to the transducing element (19) and slidable in a bore (43) extending parallel to the guide (20).

10. An instrument as in Claim 9, characterised in that the rod (42) extends as an outrigger from the transducing element into a bore (43) alongside the guide (20).

11. An instrument as in Claim 9, characterised in that the rod (42) extends from a support (44) fixed in relation to the guide (20) into a bore (45) in the transducing element (19) offset from its axis.

## Patentansprüche

1. Ein Instrument mit wenigstens einem Stabmagneten (22), welcher in einem in einer Führung (20) beweglichen Wandlerelement (19) untergebracht ist, eine Anzeigevorrichtung, welche durch eine Änderung im Magnetfeld während der Bewegung des Magneten betätigt wird, und eine Vorrichtung zur Verhinderung der Drehung des Wandlerelements (19) bezogen auf die Führung (20), gekennzeichnet dadurch, daß das Wandlerelement (19) einen in einer Führungsbohrung gleitfähigen zylindrischen Abschnitt aufweist, wobei die Vorrichtung zur Verhinderung der Drehung aus formschlüssigen Eingriffen (27 und 30) zwischen einem Teil einer Feder (18) und dem Wandlerelement sowie zwischen einem anderen Teil der Feder und der Führung (20) besteht.

2. Ein Instrument gemäß Anspruch 1, dadurch gekennzeichnet, daß die Positionier-Eingriffstücke nichtwendelförmige Endabschnitte (27, 28) an der Feder sind, welche in nichtkonzentrische Verbände (29, 30) an dem Wandlerelement (19) und an der Führung (20) eingreifen.

3. Ein Instrument gemäß Anspruch 2, dadurch gekennzeichnet, daß die Positionier-Eingriffstücke Gurtenabschnitte (27, 28) der Feder (18) sind, welche in Flachstücke (29, 30) an dem Wandlerelement (19) bzw. an der Führung (20) eingreifen.

4. Ein Instrument gemäß Anspruch 2, dadurch gekennzeichnet, daß die Positionier-Eingreifstücke Endabschnitte (31, 32) der Feder (19) sind, welche sich längs erstrecken und in nichtaxiale Löcher (33, 34) im Wandlerelement (19) und in der Führung (20) eingreifen.

5. Ein Instrument mit wenigstens einem Stabmagneten (22), welcher innerhalb eines in einer Führung (20) beweglichen Wandlerelements (19) untergebracht ist, eine Anzeigevorrichtung, welche durch eine Änderung im Magnetfeld während der Bewegung des Magneten betätigt wird, und eine Vorrichtung zur Verhinderung der Drehung des Wandlerelements (19) bezogen auf die Führung (20), dadurch gekennzeichnet, daß die Vorrichtung zur Drehungsverhinderung aus einem keilförmigen Eingriff (37, 38, 39) zwischen dem Wandlerelement (19) und der Führung (20) besteht.

6. Ein Instrument gemäß Anspruch 5, dadurch gekennzeichnet, daß der keilförmige Eingriff aus in Vertiefungen (38) im Wandlerelement (19) positionierten Kugeln (37) besteht, welche in Längsnuten (39) in der Führung (20) eingreifen.

7. Ein Instrument gemäß Anspruch 5, dadurch gekennzeichnet, daß das Wandlerelement (19) in einen Abschnitt (40) nichtkreisförmigen Querschnitts aufweist, welcher in einer in der Führung (20) befindlichen Bohrung (41) ähnlichen Querschnitts gleitfähig ist.

8. Ein Instrument gemäß Anspruch 7, dadurch gekennzeichnet, daß der Abschnitt nichtkreisförmigen Querschnitts (40) quadratisch ist, und zwar mit angefasten oder runden Ecken.

9. Ein Instrument mit wenigstens einem Stabmagneten (22), welcher in einem in einer Führung (20) beweglichen Wandlerelement (19) untergebracht ist, eine Anzeigevorrichtung, welche durch eine Änderung im Magnetfeld während der Bewegung des Magneten betätigt wird, und eine Vorrichtung zur Verhinderung der Drehung des Wandlerelements (19) bezogen auf die Führung (20), dadurch gekennzeichnet, daß die Drehungsverhinderungsvorrichtung eine Stange (42) ist, welche parallel zum Wandlerelement (19) verläuft und in einer parallel zur Führung (20) verlaufenden Bohrung (43) gleitfähig ist.

10. Ein Instrument gemäß Anspruch 9, dadurch gekennzeichnet, daß die Stange (42) sich als Ausleger vom Wandlerelement in eine neben der Führung (20) befindliche Bohrung (43) hinein erstreckt.

11. Ein Instrument gemäß Anspruch 9, dadurch gekennzeichnet, daß die Stange (42) sich von einer bezogen auf die Führung (20) feststehenden Stütze (44) in eine im Wandlerelement (19) befindliche und von dessen Achse versetzte Bohrung (45) hinein erstreckt.

**Revendications**

1. Instrument avec au moins un aimant droit (22) logé à l'intérieur d'un élément transducteur (19) mobile dans un guide (20), des moyens indicateurs actionnés par une modification du champ magnétique tandis que l'aimant se déplace, et des moyens pour empêcher la rotation de l'élément transducteur (19) par rapport au guide (20), caractérisé en ce que l'élément transducteur (19) possède une partie cylindrique qui peut coulisser dans un alésage de guidage, et en ce que les moyens pour empêcher la rotation comprennent des moyens de liaison à positionnement positif (27, 29 et 28, 30) entre une partie d'un ressort (18) et l'élément transducteur (19), et entre une autre partie du ressort et le guide (20).

2. Instrument selon la revendication 1, caractérisé en ce que les moyens de liaison à positionnement sont des parties terminales non hélicoïdales (27, 28) prévues sur le ressort (18), qui coopèrent avec des formations non concentriques (29, 30) prévues sur l'élément transducteur (19) et sur le guide (20).

3. Instrument selon la revendication 2, caractérisé en ce que les moyens de liaison à positionnement sont des parties terminales correspondant à des cordes (27, 28) du ressort (18), qui coopèrent avec des méplats (29, 30) prévus respectivement sur l'élément transducteur (19) et sur le guide (20).

4. Instrument selon la revendication 2, caractérisé en ce que les moyens de liaison à positionnement sont des parties terminales (31, 32) du ressort (18) qui s'étendent longitudinalement et qui s'engagent dans des orifices non axiaux (33, 34) pratiqués dans l'élément transducteur (19) et dans le guide (20).

5. Instrument avec au moins un aimant droit (22) logé à l'intérieur d'un élément transducteur (19) mobile dans un guide (20), des moyens indicateurs actionnés par une modification du champ magnétique tandis que l'aimant se déplace, et des moyens pour empêcher la rotation de l'élément transducteur (19) par rapport au guide (20), caractérisé en ce que les moyens pour empêcher la rotation comprennent une liaison cannelée (37, 38, 39) entre l'élément transducteur (19) et le guide (20).

6. Instrument selon la revendication 5, caractérisé en ce que la liaison cannelée comprend des billes (37) situées dans des dépressions (38) de l'élément transducteur (19), qui s'introduisent dans des rainures longitudinales (39) pratiquées dans le guide (20).

7. Instrument selon la revendication 5, caractérisé en ce que l'élément transducteur (19) possède une partie de section non circulaire (40) qui peut coulisser dans un alésage (41) de section similaire, pratiqué dans le guide (20).

8. Instrument selon la revendication 7, caractérisé en ce que la partie de section non circulaire (40) est carrée, avec des angles biseautés ou arrondis.

9. Instrument avec au moins un aimant droit (22) logé à l'intérieur d'un élément transducteur (19) mobile dans un guide (20), des moyens indicateurs actionnés par une modification du champ magnétique tandis que l'aimant se déplace, et des moyens pour empêcher la rotation de l'élément transducteur (19) par rapport au guide (20), caractérisé en ce que les moyens pour empêcher la rotation consistent en une tige (42) qui s'étend parallèlement à l'élément transducteur (19), et qui peut coulisser dans un alésage (43) s'étendant parallèlement au guide (20).

10. Instrument selon la revendication 9, caractérisé en ce que la tige (42) s'étend en porte-à-faux à partir de l'élément transducteur, pour rentrer dans un alésage (43) pratiqué le long d'un côté du guide (20).

11. Instrument selon la revendication 9, caractérisé en ce que la tige (42) s'étend à partir d'un support (44) fixe par rapport au guide (20), pour rentrer dans un alésage (45) pratiqué dans l'élément transducteur (19) dans une position décalée par rapport à son axe.

Fig. 1

Fig. 2

Fig. 3

Fig. 4

Fig. 5

Fig. 6

Fig. 7

Fig. 8

Fig. 9

Fig. 10

Fig. 11